# EUROPEAN PATENT SPECIFICATION

(11) **EP 3 572 265 B1**
(45) Date of publication and mention of the grant of the patent: **04.05.2022**
(21) Application number: 18741642.5
(22) Date of filing: 19.01.2018
(51) Int. Cl.: B60K 15/03, B23K 11/11, B65D 25/02, B23K 11/14, B23K 101/00

(54) **FUEL TANK**
KRAFTSTOFFTANK
RÉSERVOIR DE CARBURANT

(30) Priority: 20.01.2017 JP 2017008102
(43) Date of publication of application: 27.11.2019
(73) Proprietor: Nippon Steel Corporation, Tokyo 100-8071 (JP)
(72) Inventor: MIZUGUCHI, Toshinori, Tokyo 100-8071 (JP); FUDA, Masahiro, Tokyo 100-8071 (JP); INOUE, Akiyoshi, Tokyo 100-8071 (JP); NAKANO, Junji, Tokyo 100-8071 (JP)
(74) Representative: Zimmermann & Partner Patentanwälte mbB
(86) International application number: PCT/JP2018/001633
(87) International publication number: WO 2018/135635

(56) References cited:
- EP-A1- 2 711 224
- EP-A1- 2 776 263
- EP-B1- 2 776 263
- WO-A1-2010/122065
- DE-A1-102012 019 334
- JP-A- 2005 162 010
- JP-A- 2011 132 336
- JP-A- 2015 504 386
- US-A1- 2012 138 606

## Description

### Technical Field

The present invention relates to a fuel tank, and more specifically relates to a fuel tank made of iron.

### Background Art

For automotive fuel tanks, tanks made of iron have been used for a long time, but resin tanks have become used these days. Reasons for this include the fact that a multiple-layer structure resin tank has been developed as a measure for prevention of fuel penetration, the fact that resins are advantageous for weight reduction in terms of difference in specific gravity, etc.

As a technology that has enabled a weight reduction of a resin tank, for example, Patent Literature 1 discloses a technology in which protrusions that are formed on opposing surfaces of a resin tank and that protrude to the interior are welded together into a support column. The rigidity of the fuel tank can be improved by providing the support column in the interior of the fuel tank. However, in such a technology, the capacity of the fuel tank is reduced. Further, these days, the pressure increase of a fuel tank is in progress due to the spread of hybrid vehicles (HVs) and plug-in hybrid vehicles (PHVs). In a resin tank, the capacity is further reduced when the number of support columns mentioned above is increased in order to improve pressure resistance.

Thus, for example, Patent Literature 2 discloses a technique in which a hollow resin support column is attached to the interior of a resin tank and is fusion-bonded to a panel, and thereby the rigidity of the resin tank is improved while a decrease in tank capacity is suppressed. Further, Patent Literature 3 discloses a technology in which, in a tank composed of two shells, a hollow support column composed of two elements is provided in the interior of the tank. The hollow support column is secured in the process of joining the shells together, and forms a support column that connects facing wall regions of the tank together. The fastening connection portion of the hollow support column is fixed by a closing body; therefore, even when tension or pressure in the tank is changed, the lock of the hollow member is not released. The mechanical load capacity properties of the tank can be enhanced by providing such a hollow support column.

Patent Literature 4 describes a fuel tank for a motor vehicle, which is made up of two shells which are complementary to one another, wherein the shells are supported against one another by at least one strut penetrating the tank, connecting opposing wall regions of the tank, and wherein the two shells are produced from thermoplastic material.

### Citation List

### Patent Literature

Patent Literature 1: JP 2006-256462A
Patent Literature 2: JP 2014-516327T
Patent Literature 3: JP 2015-504386T
Patent Literature 4: EP 2 776 263 A1

### Summary of Invention

### Technical Problem

However, the tank and the support column of each of Patent Literatures 2, 3 and 4 above are made of resin. Thus, the tank and the support column can be easily fixed together by welding, riveting using a hot melt material of the tank, or the like. However, in the case where the tank is made of iron, it is difficult to install a support column in the interior of the tank as in Patent Literatures 2, 3 and 4. Hence, to enhance pressure resistance in a tank made of iron, there is no choice but to increase the sheet thickness of a steel sheet that forms the tank to ensure rigidity, and consequently the weight becomes larger than the weight of a resin tank.

Thus, the present invention has been made in view of the problem mentioned above, and an object of the present invention is to provide a new and improved fuel tank that can enhance pressure resistance and can achieve a weight reduction.

### Solution to Problem

The invention is defined by the subject-matter of the independent claims, wherein the subject-matter of the independent claim 1 defines the first variant of the invention and the subject-matter of the independent claim 2 defines the second variant of the invention.

Additional optional embodiments are defined by the subject-matter of the dependent claims.

### Advantageous Effects of Invention

According to the present invention, pressure resistance can be enhanced, and a weight reduction can be achieved.

### Brief Description of Drawings

[FIG. 1] FIG. 1 is a schematic cross-sectional view showing a fuel tank according to the first variant of the present invention.
[FIG. 2] FIG. 2 is a schematic cross-sectional view showing a state where the fuel tank according to the embodiment is separated into an upper panel and a lower panel.
[FIG. 3A] FIG. 3A is an explanatory diagram showing a configuration of a support column according to the first variant of the invention.
[FIG. 3B] FIG. 3B is a side view showing an insertion member and a cross-sectional view in an A-A cutting line.
[FIG. 3C] FIG. 3C is a side view showing a cylindrical member and a cross-sectional view in a B-B cutting line.
[FIG. 4A] FIG. 4A is a perspective view showing an example of a base.
[FIG. 4B] FIG. 4B is a partial cross-sectional view showing a state where a base is attached to a panel.
[FIG. 5] FIG. 5 is an explanatory diagram showing a case where an adhesive is used as a lock member that makes lock so that a tip section of a leg section of an insertion member does not bend.
[FIG. 6] FIG. 6 is an explanatory diagram showing a case where a lock member is brought between tip sections of leg sections by an elastic member.
[FIG. 7] FIG. 7 is an explanatory diagram showing a case where an opening length of an opening of FIG. 6 is increased.
[FIG. 8] FIG. 8 is a schematic cross-sectional view (according to the second variant of the invention) showing a fuel tank in which a second member is provided with a support column flange section to connect the second member and a lower panel together.

### Description of Embodiments

Hereinafter, (a) preferred embodiment(s) of the present invention will be described in detail with reference to the appended drawings. Note that, in this specification and the appended drawings, structural elements that have substantially the same function and structure are denoted with the same reference numerals, and repeated explanation of these structural elements is omitted.

### <1. Structure of fuel tank>

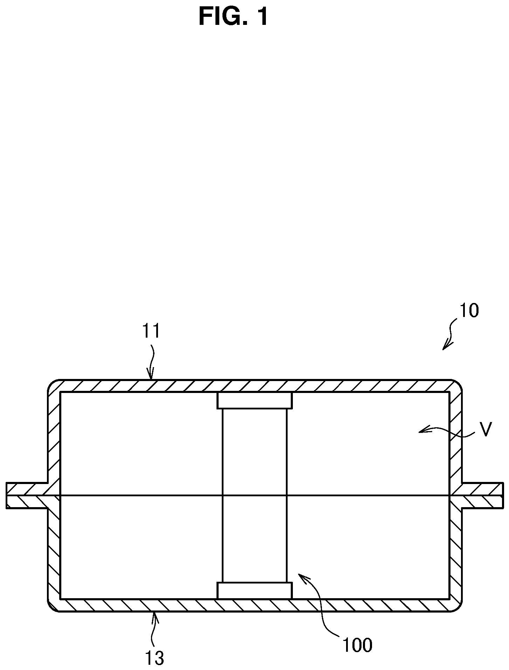

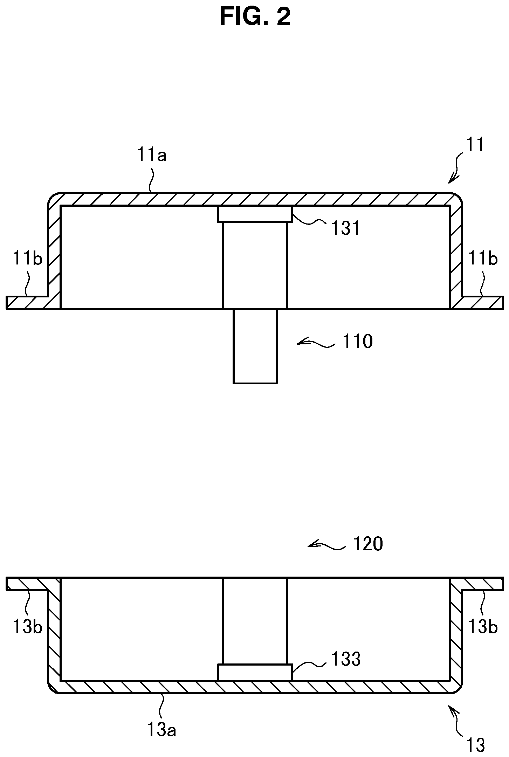

First, a rough configuration of a fuel tank according to an embodiment of the first variant of the present invention is described on the basis of FIG. 1 and FIG. 2. FIG. 1 is a schematic cross-sectional view showing a fuel tank 10 according to the present embodiment. FIG. 2 is a schematic cross-sectional view showing a state where the fuel tank 10 according to the present embodiment is separated into an upper panel 11 and a lower panel 13.

The fuel tank 10 according to the present embodiment is, for example, an automotive fuel tank, and is composed of an upper panel 11 made of iron and a lower panel 13 made of iron. As compared to a fuel tank made of resin, the fuel tank 10 made of iron has an advantage that the shape is simple and gasoline vapor is less likely to leak. As shown in FIG. 2, the upper panel 11 has a concave section 11a that forms a space for storing fuel and a flange section 11b that is formed at the edge of the concave section 11a in order to join the upper panel 11 and the lower panel 13 together. Similarly, the lower panel 13 has a concave section 13a that forms a space V for storing fuel and a flange section 13b that is formed at the edge of the concave section 13a in order to join the upper panel 11 and the lower panel 13 together. The flange section 11b of the upper panel 11 and the flange section 13b of the lower panel 13 are joined together by, for example, seam welding.

The fuel tank 10 according to the present embodiment includes, in space V, a support column 100 extending in the direction in which the upper panel 11 and the lower panel 13 face each other. The support column 100 is a reinforcement member provided in order to enhance the rigidity of the fuel tank 10. The support column 100 is made of a thermoplastic resin. The fuel tank 10 can be made lighter in weight by forming the support column 100 out of a material having a lighter weight than iron. As shown in FIG. 2, the support column 100 is composed of a first member 110 that is provided on the bottom surface of the concave section 11a of the upper panel 11 via a first base 131 and a second member 120 that is provided on the bottom surface of the concave section 13a of the lower panel 13 via a second base 133. The first member 110 and the second member 120 that constitute the support column 100 may be referred to as support column members. The support column 100 is formed by the first member 110 of the upper panel 11 and the second member 120 of the lower panel 13 being combined. In the present embodiment, the first member 110 and the second member 120 are linked together by a snap-fit mechanism.

### <2. Support column>

### [2-1. Structure]

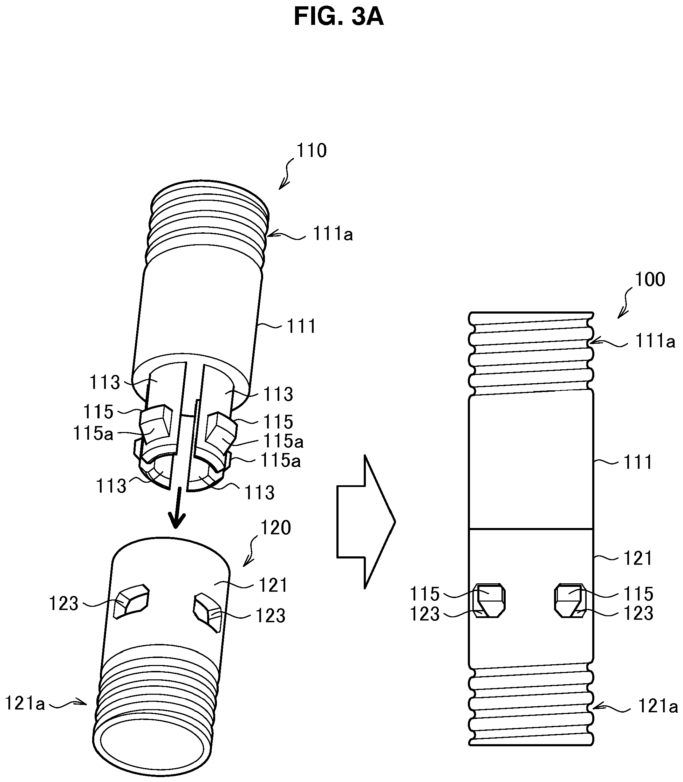

The structure of the support column 100 according to the present embodiment will now be described in more detail on the basis of FIG. 3A to FIG. 3C. The left side of FIG. 3A shows a state where the first member 110 and the second member 120 are separated, and the right side of FIG. 3A shows a state where the first member 110 and the second member 120 are linked together. As described above, the support column 100 according to the present embodiment is formed by linking the first member 110 and the second member 120 together by means of a snap-fit mechanism. The snap-fit mechanism is a kind of mechanical joining method used for the coupling of metal members, plastic members, or the like, and is a technique in which the elasticity of a material is utilized to fit and fasten one member into another member and thereby the two members are coupled. Specifically, in the present embodiment, the first member 110 is formed as an insertion member that is inserted and fitted into the second member 120, and the second member 120 is formed as a cylindrical member that the first member 110 is inserted and fitted into.

### (Insertion member)

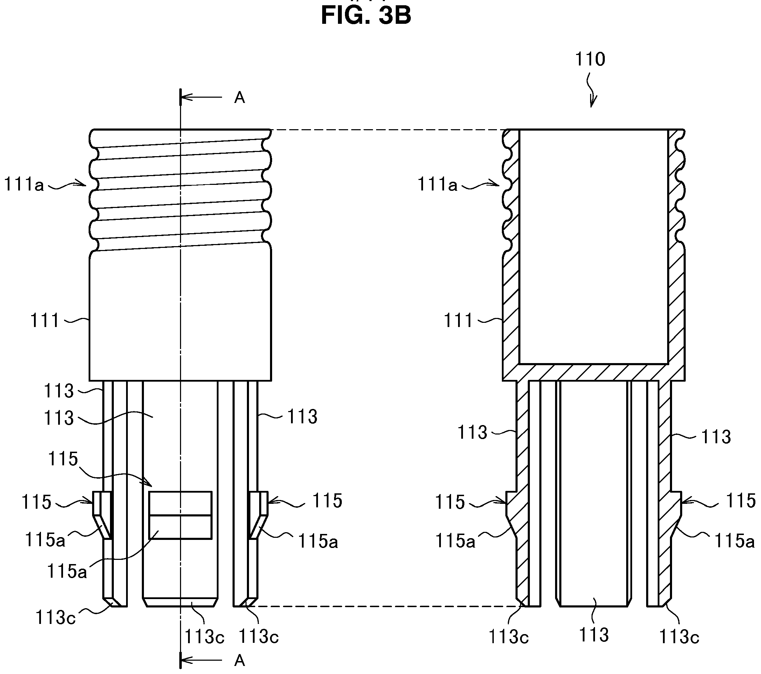

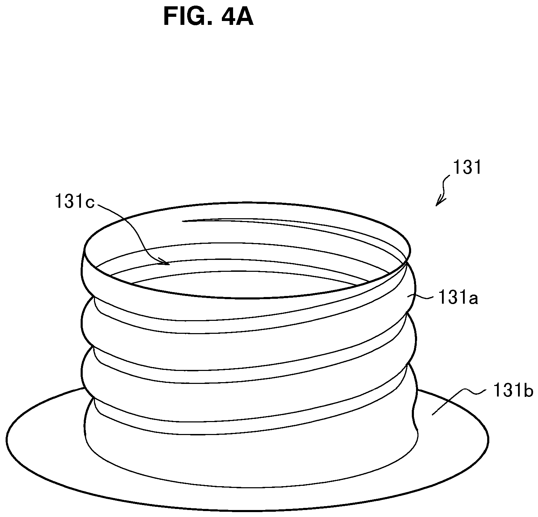

As shown in FIG. 3B, the insertion member that is the first member 110 in the present embodiment is composed of a pedestal section 111 and leg sections 113 each having a fastening claw 115. The pedestal section 111 is a portion that is connected to the upper panel 11 via a first base 131 like that shown in FIG. 4A, and is formed in a cylindrical shape, for example. The pedestal section 111 needs only to be capable of making linkage to the first base 131, and may therefore have at least the length of the portion to be linked to the first base 131. The total length (length in the insertion direction) of the insertion member is determined in accordance with the height of space V of the fuel tank 10 in the direction in which the upper panel 11 and the lower panel 13 face each other. The longer the total length is, the more easily the insertion member and the cylindrical member are coupled.

Since the total length of the insertion member is fixed, the length of the leg section 113 extending from the pedestal section 111 becomes shorter as the pedestal section 111 becomes longer. At the time when the insertion member attached to the upper panel 11 and the cylindrical member attached to the lower panel 13 are linked together, a worker cannot touch the insertion member or the cylindrical member, and performs the work while observing the positional relationship between these members. When such a working situation is considered, a longer leg section 113 allows easier observation and thus allows the work to be performed more easily. Depending on the situation, a longer leg section 113 is advantageous also for the correction of the support column 100 by a jig. Further, a longer leg section 113 requires a lower pressing force when fastening the fastening claw 115 to an opening of the cylindrical member, and allows easier bending of the leg section 113; thus, allows easier insertion into the cylindrical member.

A screw crest 111a corresponding to a screw groove 131c formed on the inner peripheral surface of the first base 131 is formed on the outer peripheral surface of the pedestal section 111. Thus, the insertion member can be easily fixed to the upper panel 11 by screwing the pedestal section 111 of the insertion member into the first base 131 fixed to the upper panel 11.

The leg section 113 is a member that is provided to protrude from one end of the pedestal section 111 in the center axis direction of the insertion member. That is, although one end of the leg section 113 is supported by the pedestal section 111, the motion of the other end is not regulated; therefore, the other end can bend in the diameter direction by virtue of the elasticity of the material. In the insertion member shown in FIG. 3A and FIG. 3B, four leg sections 113 are provided at substantially equal intervals along the circumferential direction of the pedestal section 111. The number of leg sections 113 is not limited to such an example, and it is sufficient that a plurality of leg sections 113 be provided. Each leg section 113 is provided on the pedestal section 111 so as to, when inserted in the cylindrical member, be located along the inner surface of the cylindrical member. The outer surface side of a tip section of the leg section 113 may be fashioned in a tapered shape. By forming a tapered section 113c in the tip section, the insertion member can be smoothly inserted into the cylindrical member even when the installation positions of the insertion member and the cylindrical member are slightly misaligned.

In each leg section 113, a fastening claw 115 that can be fastened to an opening provided in the cylindrical member is provided on the outer surface of the leg section 113 facing the cylindrical member. In the diameter direction, the fastening claw 115 protrudes on the outside with respect to the inner diameter of the cylindrical member. Therefore, at the time when the insertion member is inserted into the cylindrical member, it is necessary that the leg section 113 be bent and the fastening claw 115 be placed in the interior of the cylindrical member. Thus, the leg section 113 is formed so as to bend in the diameter direction.

The fastening claw 115 is provided in a position corresponding to the opening of the cylindrical member, and it is preferable that, in the center axis direction of the insertion member, the fastening claw 115 be provided on the tip side of the leg section 113 on the opposite side to the pedestal section 111. Thereby, upon starting the insertion of the insertion member into the cylindrical member, the fastening claw 115 can be brought into contact with the inner peripheral surface of the cylindrical member; thus, the leg section 113 can be bent toward the center axis by small force, and the insertion member can be easily inserted into the cylindrical member. The shape of the fastening claw 115 is not particularly limited; for example, as shown in FIG. 3B, the shape may be an oblique surface 115a in which the protrusion on the outside in the diameter direction becomes larger from the tip side of the fastening claw 115 toward the pedestal section 111 side, or may be a R-curved shape. Thereby, at the time when the insertion member is inserted into the cylindrical member, the leg section 113 gradually bends along the oblique surface 115a of the fastening claw 115 contacting with the inner surface of the cylindrical member; thus, the insertion of the insertion member into the cylindrical member can be performed more smoothly.

In the snap-fit mechanism, when the clearance between the fastening claw 115 serving as a convexity and the opening of the cylindrical member serving as a concavity is reduced, the adjustment of the fastening of the fastening claw 115 to the opening becomes difficult. Also from such a point of view, the fastening claw 115 may be provided with the oblique surface 115a or be formed in a R-curved shape, and thereby the adjustment between the fastening claw 115 and the opening can be facilitated. For example, even when the installation positions of the insertion member and the cylindrical member that constitute the support column 100 are misaligned approximately several millimeters, the variation is absorbed by forming the oblique surface 115a or the like as the surface on the insertion side of the fastening claw 115, and the fastening claw 115 can be smoothly fastened to the opening.

It is not always necessary that fastening claws 115 be provided in all the leg sections 113, and it is sufficient that at least one fastening claw 115 be provided. To make firm the linkage between the insertion member and the cylindrical member, it is preferable to provide a plurality of fastening claws 115. For example, it is possible to provide fastening claws 115 only in a pair of leg sections 113 that face each other in the diameter direction.

### (Cylindrical member)

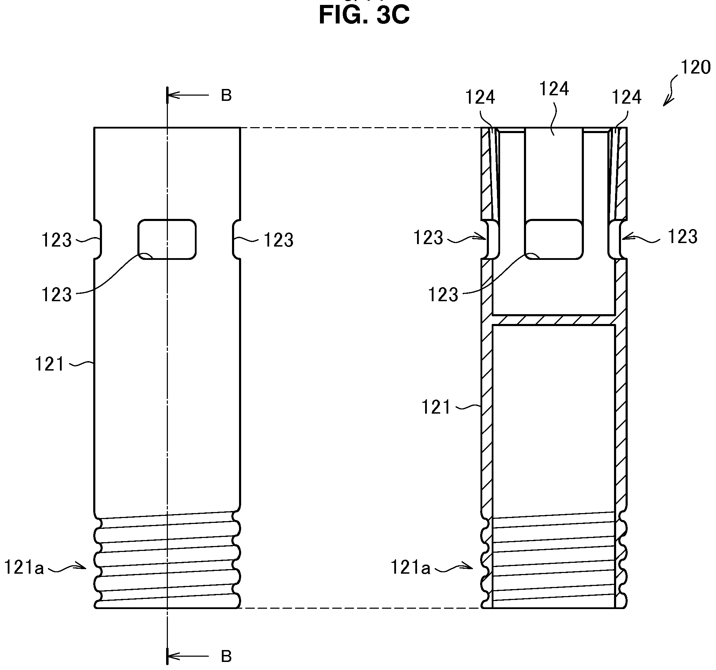

On the other hand, as shown in FIG. 3C, the cylindrical member that is the second member 120 in the present embodiment is formed of a main body section 121 in a cylindrical shape, and a plurality of openings 123 are formed along the circumferential direction in the side peripheral surface of the main body section 121. A screw crest 121a corresponding to a screw groove formed on the inner peripheral surface of the second base 133 is formed on the outer peripheral surface on one end side of the main body section 121. Thus, the cylindrical member can be easily fixed to the lower panel 13 by screwing the main body section 121 of the cylindrical member into the second base 133 fixed to the lower panel 13.

The insertion member is inserted into the main body section 121 from an end of the hollow portion on the opposite side to an end at which the screw crest 121a for connection to the second base 133 is formed. The opening 123 formed in the side peripheral surface of the main body section 121 is a portion where the fastening claw 115 of the insertion member inserted in the main body section 121 is fastened, and is opened in a shape corresponding to the shape of the fastening claw 115. When the fastening claw 115 is located in the opening 123, the leg section 113 that has been bent on the center side moves on the outside in the diameter direction due to restoring force, and the fastening claw 115 is fastened to the opening 123. Thereby, the insertion member is linked to the cylindrical member, and movements in the axial direction and the circumferential direction are regulated. The openings 123 are provided to correspond to the number of fastening claws 115, and at least one or more openings 123 are provided.

A guide groove 124 that guides the leg section 113 of the insertion member to be inserted into the cylindrical member may be formed on the inner surface of the cylindrical member. The guide groove 124 has an inclination in which the thickness of the cylindrical member becomes larger from the tip side where the insertion member is inserted toward the opening 123. At the time when the upper panel 11 equipped with the insertion member that is the first member 110 and the lower panel 13 equipped with the cylindrical member that is the second member 120 are superimposed as shown in FIG. 1 to link the first member 110 and the second member 120 together, a worker cannot hold the first member 110 or the second member 120 with the hands to link them together. Thus, by providing such a guide groove 124, the leg section 113 of the insertion member can be moved along the guide groove 124. Therefore, even when a worker or a robot grasps at least one of the upper panel 11 and the lower panel 13 to superimpose these panels without grasping the first member 110 or the second member 120, the worker or the robot can insert and fit the insertion member into the cylindrical member easily and reliably.

The support column 100 formed by linking the insertion member and the cylindrical member together forms one pillar as shown on the right side of FIG. 3A. The length of the support column 100 is substantially equal to the height of the internal space V when the upper panel 11 and the lower panel 13 are caused to face each other and are closed to form the fuel tank 10 (that is, the height in the direction in which the upper panel 11 and the lower panel 13 face each other). Thereby, even when the internal pressure of space V of the fuel tank 10 is changed, the shape of the fuel tank 10 can be prevented from greatly changing.

### (Base)

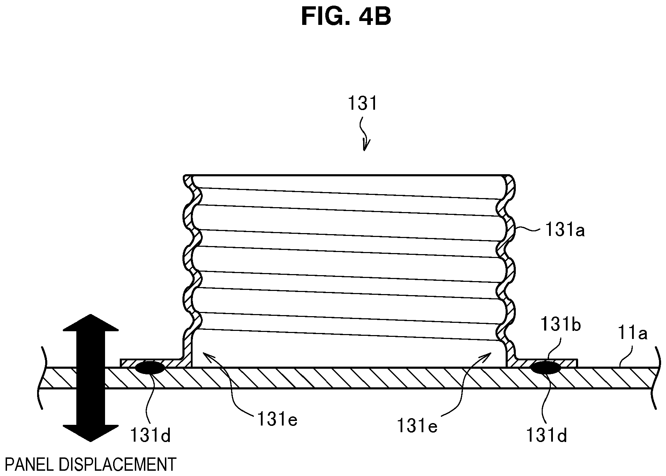

As described above, the insertion member and the cylindrical member are fixed to the upper panel 11 and the lower panel 13 via the bases 131 and 133. An example of the first base 131 is shown in FIG. 4A. Further, FIG. 4B shows a state where the first base 131 is attached to the upper panel 11. Although FIG. 4A and FIG. 4B show the first base 131, also the second base 133 may have the same configuration. As shown in FIG. 4A, the first base 131 is composed of a cylindrical section 131a and a flange section 131b provided at one end of the cylindrical section 131a. The first base 131 is a member made of iron, and is molded by, for example, working a steel sheet.

The cylindrical section 131a is a portion to be connected to the insertion member or the cylindrical member, and a screw groove 131c for screwing with the insertion member or the cylindrical member is formed on the inner peripheral surface of the cylindrical section 131a. The screw groove 131c may be formed by, for example, pressing the side surface into a screw-cutting form. The shape of the screw groove 131c is not particularly limited; however, in view of industrial mass production, forming by pressing is advantageous, and a mountain shape of a hemispherical female screw like that described in, for example, JIS-C-7709 is preferable. FIG. 4A shows an instance of a single-threaded screw; however, in order to screw and fix the pedestal section 111 of the insertion member or the main body section 121 of the cylindrical member into the base 131 or 133, it is necessary to rotate the insertion member or the cylindrical member several times with respect to the base 131 or 133. Thus, the assembly work may be lightened by using a multiple-threaded screw to reduce the number of rotations until the pedestal section 111 of the insertion member or the main body section 121 of the cylindrical member is screwed into the base 131 or 133.

The flange section 131b is extended from the peripheral edge on one end side of the cylindrical section 131a to the outside in the diameter directions. The flange section 131b spreads in directions orthogonal to the center axis of the cylindrical section 131a; as shown in FIG. 4B, the surface on the opposite side to the cylindrical section 131a is fixed in contact with the bottom surface of the concave section 11a of the upper panel 11. The sheet thickness of the first base 131 is preferably set within the range of approximately 0.8 times to 1.2 times the sheet thickness of the panel for it to be fixed to. If the sheet thickness of the first base 131 is set larger than 1.2 times the sheet thickness of the panel, there is a fear that the panel will be displaced with the flange section 131b of the first base 131 attached to the panel as a fulcrum and a fatigue crack due to pressure or vibration will occur. On the other hand, if the sheet thickness of the first base 131 is set smaller than 0.8 times the sheet thickness of the panel, there is a fear that a corner portion 131e of the flange section 131b of the first base 131 will develop a fatigue crack. Thus, the sheet thickness of the first base 131 is preferably set within the range of approximately 0.8 times to 1.2 times the sheet thickness of the panel for it to be fixed to.

The joining of the flange section 131b of the first base 131 to the panel can be performed by, for example, spot welding. In the case where spot welding is performed, the number of welds may be determined so as to satisfy fatigue strength. Further, after the spot welding, solder may be caused to flow between the panel and the flange section 131b of the first base 131; thereby, not only can connection be performed at welds 131d, but also the flange section 131b and the panel can be surface-connected; therefore, the strength can be enhanced more.

The joining of the flange section 131b of the first base 131 and the panel may be performed also by, as well as spot welding, projection welding, for example. Projection welding is a technique in which a projection is formed on one member and the one member is welded with another member by means of the projection. In the case where projection welding is performed, it is possible to perform, for example, multi-spot projection welding in which embossing is performed on the flange section 131b of the first base 131 to form a plurality of projections and the flange section 131b is welded with the panel. Alternatively, it is possible to perform ring projection welding in which a ring-like projection surrounding the cylindrical section 131a is formed on the flange section 131b of the first base 131 and the flange section 131b is welded with the panel.

The first base 131 attached to the upper panel 11 and the second base 133 attached to the lower panel 13 are provided so as to face each other when the fuel tank 10 is formed.

### [2-2. Material]

The material of the support column 100 provided in the fuel tank 10 according to the present embodiment is a thermoplastic resin. Specific examples include polyacetal (POM) and nylon (PA). By using these materials, the support column can be produced using the injection molding method, and can be produced easily and inexpensively.

During production, the fuel tank 10 made of iron undergoes a thermal history at a hundred and several tens of degrees for several tens of minutes due to the baking of black coating. Further, during use, the temperature of the fuel tank 10 may be increased up to near 60°C, which is said to be the boiling point of gasoline. The material that forms the support column 100 is required to be capable of withstanding even such heat, and a resin with a high melting point is used.

For example, polyacetal has a melting point of 160°C and a strength of approximately 60 MPa at room temperature. Polyacetal is widely used in industrial fields as an engineering plastic; is excellent in solvent resistance, experiences little swelling due to gasoline, and is relatively inexpensive in terms of cost; thus, is preferable as the material that forms the support column 100 of the fuel tank 10. In the case where the support column 100 is formed of polyacetal, the temperature is set not to exceed 160°C, which is the melting point, during coating baking. Further, nylon has a melting point of more than 200°C and a strength of near 100 MPa at room temperature. Nylon is widely used in industrial fields as an engineering plastic, and is more preferable as the material that forms the support column 100 than polyacetal.

High-density polyethylene, which is a general-purpose plastic, has a melting point of near 130°C and a strength of less than or equal to 40 MPa. High-density polyethylene has a lower melting point and a lower strength than polyacetal and nylon, is therefore more likely to melt during black coating baking, and requires that the diameter of the support column 100 be set larger to ensure strength as the support column 100. Further, high-density polyethylene may swell due to gasoline; thus, polyacetal or nylon is more preferable as the material that forms the support column 100.

### [2-3. Snap-fit mechanism]

### (Detachment prevention mechanism)

The support column 100 provided in the fuel tank 10 according to the present embodiment is formed by linking the insertion member and the cylindrical member together by means of a snap-fit mechanism. Here, the pressure of the interior of the fuel tank 10 in which the support column 100 is installed repeats positive pressure and negative pressure; at the time of positive pressure, space V expands and accordingly tensile stress acts so as to separate the insertion member and the cylindrical member that are linked together. Due to the tensile stress, it may be possible that the leg section 113 of the insertion member will bend and the fastening claw 115 that has been fastened to the opening 123 of the main body section 121 will be detached from the opening 123. If the coupling between the insertion member and the cylindrical member is released, the rigidity of the fuel tank 10 is reduced. Thus, it is preferable that the leg section 113 of the insertion member be designed not to bend after the formation of the support column 100 so that, even when the pressure of the interior of the fuel tank 10 becomes positive pressure and tensile stress is generated, the linkage between the insertion member and the cylindrical member is not released.

### (1) Use of adhesive

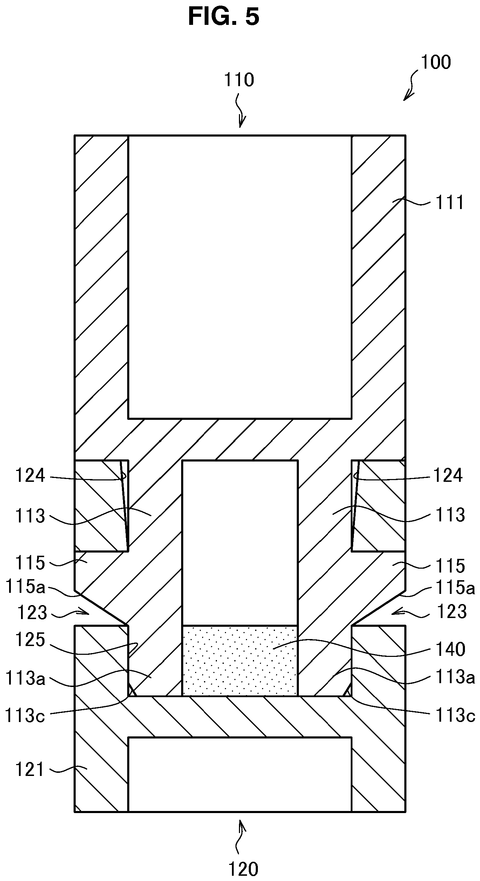

An adhesive may be used as a lock member 140 that makes lock so that a tip section 113a of the leg section 113 of the insertion member does not bend, for example. Specifically, as shown in FIG. 5, a concave section 125 that the tip section 113a of the insertion member inserted in the main body section 121 is in contact with in a state where the insertion member and the cylindrical member are linked together is provided in the interior of the cylindrical member. Then, an adhesive is put into the concave section 125 before the insertion of the insertion member, and then the insertion member and the cylindrical member are linked together. Thereby, as shown in FIG. 5, the tip section 113a of the leg section 113 of the insertion member is located in the interior of the adhesive. When the adhesive is solidified in this state, a lock member 140 that prevents bending in the diameter directions of a plurality of leg sections 113 is formed on the tip sections 113a of the leg sections 113 so as to maintain the state where the insertion member and the cylindrical member are linked together. By the lock member 140 being provided between the leg sections 113 arranged in a circumferential form, the leg sections 113 cannot bend in this place toward the center axis of the insertion member even when the pressure of the interior of the fuel tank 10 becomes positive pressure and tensile stress is generated. Thus, the linkage between the insertion member and the cylindrical member is not released.

Examples of the adhesive capable of forming the lock member 140 include a two-part epoxy resin and the like. In the case where an adhesive is used, it is expected that, when the insertion member and the cylindrical member are linked together, the adhesive that has overflowed from the concave section 125 of the cylindrical member will be attached not only to the tip section 113a of the leg section 113 but also to the spacing between the leg section 113 and the concave section 125 and the surrounding portions and adhere these portions together, and the insertion member and the cylindrical member will be linked together more firmly.

### (2) Insertion of lock member using elastic member

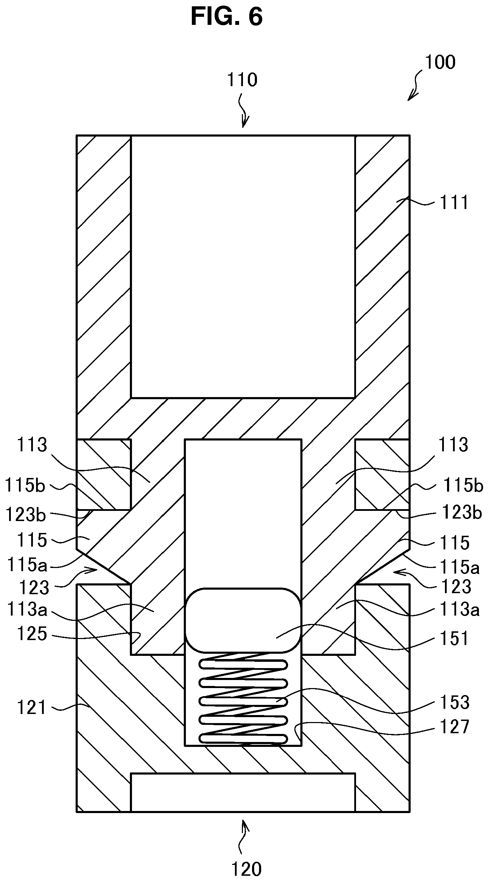

Further, for example, a mechanism in which a lock member gets between tip sections of the leg sections 113 of the insertion member when the insertion member and the cylindrical member are linked together may be formed. Specifically, as shown in FIG. 6, a concave section 125 that the tip section 113a of the insertion member inserted in the main body section 121 is in contact with in a state where the insertion member and the cylindrical member are linked together and a second concave section 127 further depressed from the bottom surface of the concave section 125 are provided in the interior of the cylindrical member. Then, a lock member 151 that gets between the tip sections 113a of the leg sections 113 arranged in a circumferential form is linked to the cylindrical member by an elastic member 153 housed in the second concave section 127.

The lock member 151 is a member having a shape corresponding to the shape of the portion between the tip sections 113a of the plurality of leg sections 113 of the insertion member in a state where the insertion member and the cylindrical member are linked together, and is formed in, for example, a substantially columnar shape. The lock member 151 is formed of the same material as the support column 100, for example. One end surface of the lock member 151 is supported by the elastic member 153, and the other end surface faces the insertion member.

The elastic member 153 is, for example, a spring, and supports the lock member 151 in a movable manner in the axial direction of the cylindrical member. The elastic member 153 is set such that the lock member 151 is located in the concave section 125 of the cylindrical member when the forces acting in a state of supporting the lock member 151 are balanced (that is, when the situation is in a steady state). Since the tip sections 113a of the leg sections 113 of the insertion member inserted in the cylindrical member are located in such a position, the lock member 151 can be brought between the tip sections 113a of the leg sections 113 of the insertion member by the lock member 151 being set to be moved to this position in a steady state.

As shown in FIG. 6, when the lock member 151 gets between the tip sections 113a of the leg sections 113, each leg section 113 becomes unable to bend in the diameter direction. Thereby, even when the pressure of the interior of the fuel tank 10 becomes positive pressure and tensile stress is generated, the leg section 113 does not bend toward the center axis of the insertion member, and the linkage between the insertion member and the cylindrical member is not released.

The provision of a lock member 140 or 151 like the above that makes lock by means of an adhesive or a resin so that the leg section 113 of the insertion member does not bend not only prevents the release of the linkage between the insertion member and the cylindrical member, but is also effective in the suppression of a creep phenomenon. The creep phenomenon refers to a phenomenon in which, when sustained stress acts on an object, warpage increases with the lapse of time. A creep phenomenon is feared in which, due to tensile stress that acts on the insertion member and the cylindrical member when the interior of the fuel tank 10 has positive pressure, the bending of the leg section 113 on the insertion member side becomes large, and each member gradually moves in the direction in which the linkage with the cylindrical member is released.

During the time when tensile stress acts on the insertion member and the cylindrical member at the time of positive pressure, force works on the portion where an end surface 115b on the pedestal section 111 side of the fastening claw 115 for forming the snap-fit mechanism and one end surface 123b of the opening 123 facing the end surface 115b are in contact. If a force-concentrating portion thus exists in the insertion member and the cylindrical member, it may be possible that each member will be damaged in this portion due to a creep phenomenon.

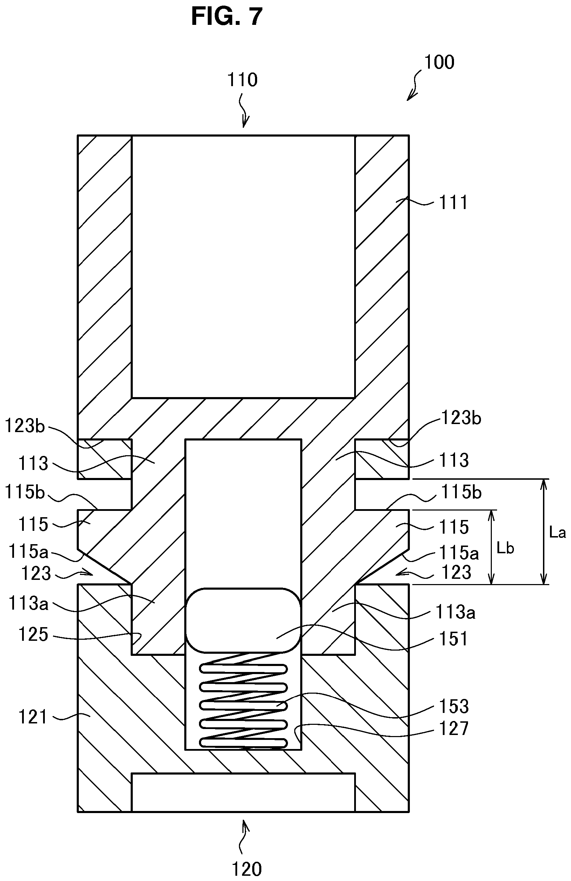

Thus, as shown in FIG. 7, the opening length La of the opening 123 in the axial direction of the cylindrical member is set larger than the length Lb of the fastening claw 115. Thereby, even when tensile stress is generated, a margin can be provided until the end surface 115b of the fastening claw 115 and the one end surface 123b of the opening 123 come into contact. That is, in an earlier period in which the pressure of the interior of the fuel tank 10 is high, the entire tank expands, and the insertion member and the cylindrical member move away; thus, the end surface 115b of the fastening claw 115 of the snap-fit mechanism comes close to the one end surface 123b of the opening 123. After that, when the end surface 115b of the fastening claw 115 comes into contact with the one end surface 123b of the opening 123, the expansion of the fuel tank 10 is suppressed by the support column 100. In this state, tensile stress acts on the contact portion between the end surface 115b of the fastening claw 115 and the one end surface 123b of the opening 123. Thus, even when the insertion member and the cylindrical member enter a linkage state, the situation does not enter a state where the fastening claw 115 and the opening 123 are constantly in contact; hence, the force acting on the portion where these are in contact can be relaxed, and a state where the portion between the end surface 115b of the fastening claw 115 and the one end surface 123b of the opening 123 is constantly under tensile stress can be prevented.

To avoid a creep phenomenon, it is necessary that the sheet thickness and the width in the circumferential direction of the leg section 113, and the thickness of the fastening claw 115 be appropriately determined. To this end, it is necessary to design the support column structure in view of the strength of the thermoplastic resin used, the maximum environmental temperature used, and the tensile stress at the time of the maximum compression.

### (Setting of breaking mode)

In the design of the fuel tank 10, it is important that a place where the fuel tank 10 breaks at the time of a collision of the vehicle be settled to prevent fuel leakage due to the breaking of the wall surface of the fuel tank 10. In the fuel tank 10 according to the present embodiment, the support column 100 is provided in the interior in order to enhance the rigidity of the fuel tank 10; however, if the strength of the support column 100 is set too high, at the time of a collision, a crack may occur in the linkage portion between the upper panel 11 and the first base 131, or the lower panel 13 and the second base 133.

Here, portions with low strength of the support column 100 are linkage portions screwed with the bases 131 and 133 and a fastening portion between the fastening claw 115 and the opening 123. Thus, the strength of the support column 100 is set such that, when an excessive impact is given to the fuel tank 10 due to a collision or the like of the vehicle, the support column 100 is, by utilizing these portions with low strength, damaged earlier than the linkage portion between the upper panel 11 and the first base 131, or the lower panel 13 and the second base 133. Thereby, the occurrence of fuel leakage from a portion other than a place to be damaged upon a collision, which place has been set in advance in the fuel tank 10, can be prevented.

The strength of the linkage portion screwed with the base 131 or 133 in the support column 100 can be controlled by the number of screw crests that link these together. Further, the breaking strength at the time of a collision of the fastening portion between the fastening claw 115 and the opening 123 can be controlled by the position in the axial direction of the support column 100; specifically, the fastening portion between the fastening claw 115 and the opening 123 may be provided at the center position of the total length of the support column 100.

### <3. Action by support column>

When the upper panel 11 and the lower panel 13 are made to face each other and the flange sections 11b and 13b of these are superimposed, the first member 110 provided in the concave section 11a of the upper panel 11 and the second member 120 provided in the concave section 13a of the lower panel 13 are snap-fit connected. Thus, the support column 100 can be easily constructed in space V of the interior of the fuel tank 10.

Here, a fuel tank is installed in a vehicle, and is used as a member that stores, for example, gasoline as fuel; the gasoline stored in the fuel tank is affected by the outside air and an exhaust pipe that passes near the fuel tank because of the structure, and is increased in temperature. Consequently, the vapor pressure of gasoline increases, and the interior of the fuel tank becomes positive pressure. For example, during parking in the nighttime, the vapor pressure of fuel may be reduced due to the air temperature, and the interior of the fuel tank may become negative pressure. Further, in association with the consumption of fuel during driving, the amount of liquid may be reduced, and the pressure of the interior of the fuel tank may decrease. Further, it may be possible that, during driving, gasoline vapor will be purged to the engine side through a canister, and the pressure of the interior of the fuel tank will decrease. Thus, the interior of the fuel tank repeats positive pressure and negative pressure. If the shape of the fuel tank changes due to the pressure change, there is a fear that strain generated in part of the panel will exceed the yield point of the steel and enter a plastic region, and will cause low cycle fatigue. The amount of deformation of the fuel tank can be suppressed by increasing the sheet thickness, and hence usually the sheet thickness design is made so as not to cause low cycle fatigue.

In the sheet thickness design, also vibration fatigue, that is, high cycle fatigue is taken into account. The fuel tank is attached to a lower portion of the vehicle with a bolt or a belt. When the vehicle travels, vibration from the road surface is transmitted to the fuel tank. The fuel tank has a prescribed vibration eigenvalue; when the sheet thickness is reduced, the eigenvalue is reduced and comes close to the input frequency from the road surface, and is likely to cause resonance. Hence, there is also a case where the sheet thickness is determined in order to avoid vibration fatigue. Thus, conventionally in a fuel tank made of iron, reducing the sheet thickness has been difficult in terms of avoiding pressure fatigue and vibration fatigue.

Further, these days, also a fuel tank with high pressure resistance is becoming demanded. In this regard, in response to the fact that vapor emission regulations tend to be tightened, the installation of an activated carbon canister is employed so that gasoline vapor does not escape from the fuel system line to the air. Gasoline vapor adsorbed on the canister is purged during the operation of the engine, and is not discharged to the air. At this time, the canister is dried. However, in an electric car or a plug-in hybrid vehicle equipped with a generator, the time when the engine is in operation is short, and gasoline adsorbed on the canister is less likely to be removed to dryness. To reduce the load of the canister, it is necessary to increase the release pressure of an isolation valve connected to the fuel tank, and the amount of compression is said to be 30 to 40 kPa. Conventionally, to construct a fuel tank made of iron withstanding this pressure, it is necessary to use a panel having a sheet thickness around twice the normal sheet thickness, and the weight of the fuel tank is increased.

Thus, in a conventional fuel tank made of iron, reducing the sheet thickness of the panel has been difficult in terms of ensuring rigidity. However, in the fuel tank 10 according to the present embodiment, the rigidity of the fuel tank 10 can be enhanced by providing the support column 100. Therefore, the sheet thickness of each of the upper panel 11 and the lower panel 13 that constitute the fuel tank 10 can be made smaller than a conventional sheet thickness, and a weight reduction of the fuel tank 10 can be achieved. Further, in the fuel tank 10 according to the present embodiment, the support column 100 is formed of a thermoplastic resin having a smaller specific gravity than iron. Hence, even when the support column 100 is provided in the interior of the fuel tank 10, the weight is not greatly increased.

### <4. Design example>

The fuel tank 10 according to the present embodiment described above can be designed by, for example, using a computer simulation using the finite element method. Specifically, first, positions where, in a state where the support column 100 is not provided, the displacements of panels are at the maximum when the internal pressure of the fuel tank 10 is set to positive pressure or negative pressure are found. The support column 100 is attached to these maximum displacement positions. A circular horizontal portion for providing a base is provided in a position of each of the facing wall surfaces of the panels where the support column 100 is to be installed. In a fuel tank made of iron, a baffle, a pipe, a valve component, etc. are attached to the interior; hence, it is desired that the area of the circular shape provided on the wall surface of the panel be set as small as possible in view of the attachment positions etc. of these components.

Next, a computer simulation is used to calculate the force applied to the support column 100, and the diameter and the wall thickness of the support column 100 that can ensure sufficient stress are determined. The force rate determining position at this time is a position where the insertion member and the cylindrical member are fastened together by a snap-fit mechanism; thus, the thickness and the length of the leg section 113 of the insertion member and the thickness of the fastening claw 115 are determined while attention is paid to the strength of the position mentioned above.

There is also a case where the sheet thickness of a tank made of iron is determined while, as well as pressure fatigue, vibration fatigue is taken into account as described above. When taking vibration fatigue into account, the position of an antinode of vibration is found on a computer simulation, and design is made such that the support column 100 is installed in the vicinity of the antinode. Thus, the eigenvalue of vibration can be controlled by the support column 100. The point is to make design in such a manner that the eigenvalue is set higher than the frequency inputted from the road surface.

As a specific example, when it is assumed that the sheet thickness of an ordinary fuel tank made of iron is approximately 0.8 mm, the weight is approximately 10 kg. When the sheet thickness of such a fuel tank in which at least one support column made of a thermoplastic resin is installed is calculated by the computer simulation described above, it has been revealed that the sheet thickness of the fuel tank can be made less than or equal to approximately 0.6 mm. The weight of the fuel tank at this time is approximately 7 Kg. One support column made of resin is approximately several hundred grams; hence, even when a plurality of support columns are installed, the weight can be made lighter than the weight of an ordinary fuel tank made of iron. From this, it can be seen that a weight substantially equal to the weight of a fuel tank made of plastic can be achieved. Further, also for a high-pressure tank, which is expected to de increasingly demanded with the spread of plug-in hybrid cars and range extended electric cars, the weight increase of the tank can be suppressed to the minimum by using a fuel tank provided with a support column made of a thermoplastic resin according to the present embodiment.

### <5. Second variant of the invention>

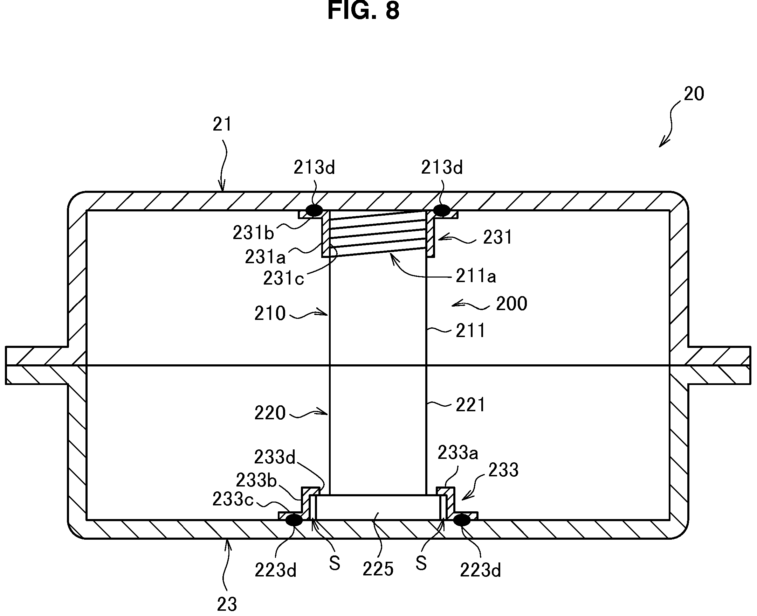

In the fuel tank 10 described above (first variant of the invention), the first base 131 and the first member 110 provided on the upper panel 11, and the second base 133 and the second member 120 provided on the lower panel 13 are each connected together by screw connection in which a screw groove formed on the inner peripheral surface of the base and a screw crest formed on the support column member are screwed together. The second variant of the invention is shown in FIG.8, wherein a support column flange section may be provided in either one of the first member and the second member that constitute the support column, and the support column member may be attached to the panel in such a manner that the support column flange section is held by the base and the panel.

When described in detail, a fuel tank 20 shown in FIG. 8 is composed of an upper panel 21 made of iron and a lower panel 23 made of iron. The fuel tank 20 includes, in the space of the interior, a support column 200 extending in the direction in which the upper panel 21 and the lower panel 23 face each other. The support column 200 is a reinforcement member provided in order to enhance the rigidity of the fuel tank 20, and is made of a thermoplastic resin. The support column 200 is composed of a first member 210 that is provided via a first base 231 provided on the upper panel 21 and a second member 220 that is provided via a second base 233 provided on the lower panel 23. The first member 210 and the second member 220 are linked together by a snap-fit mechanism, and constitute the support column 200.

The first member 210 is formed as, for example, an insertion member, and a screw crest 211a is formed on the outer peripheral surface of a pedestal section 211, similarly to the first member 110 shown in FIG. 3A etc. Further, the first base 231 provided on the upper panel 21 has a configuration like that shown in FIG. 4A and FIG. 4B, and a screw groove 231c is formed on the inner surface of a cylindrical section 231a. A flange section 231b of the first base 231 is fixed to the upper panel 21 by welds 213d. The first member 210 is fixed to the upper panel 21 by screwing the screw crest 211a into the screw groove 231c of the first base section 231.

The second member 220 is formed as, for example, a cylindrical member similarly to the second member 120 shown in FIG. 3A etc. The second member 220 shown in FIG. 8 is formed as a flange-equipped support column member that includes a support column flange section 225 at one end of a main body section 221. The second member 220 is connected to the lower panel 23 by the support column flange section 225 being held by the second base 233 and the lower panel 23.

The second base 233 is composed of an upper section 233a in which an opening 233d is formed, a flange section 233c that is fixed in contact with the bottom surface of the lower panel 23, and a wall section 233b that links the upper section 233a and the flange section 233c together. The upper section 233a is provided in order to suppress the movement in the vertical direction of the upper surface of the support column flange section 225 (the surface on the opposite side to the lower panel 23). Hence, the inner diameter of the opening 233d formed in the upper section 233a is formed to be larger than the outer diameter of the second member 220 and smaller than the outer diameter of the support column flange section 225. The flange section 233c of the second base 233 is fixed to the lower panel 23 by welds 223d.

Here, when the second member 220 is connected to the lower panel 23 by the second base 233, the second base 233 holds the support column flange section 225 together with the lower panel 23 in a state where spacing S is provided so that the support column flange section 225 can move at least in the diameter directions. Spacing S may be provided such that the support column flange section 225 can move not only in the diameter directions but also in the vertical direction. In the fuel tank 20, in order that the first member 210 and the second member 220 that constitute one support column 200 may be linked together by a snap-fit mechanism when the upper panel 21 and the lower panel 23 are joined together, it is necessary that the installation positions of the first base 231 and the second base 233 coincide. In a tank made of resin, a support column is fusion-bonded to a panel, and hence it is not necessary to consider the accuracy of the positions of the upper and lower sides of the support column. However, in the case of a tank made of iron, whether the upper and lower support column members can be linked together or not is determined by the installation positions of the bases on the panels; hence, particularly in the case where a plurality of support columns 200 are provided, there may be a case where the positions of the first member 210 and the second member 220 are misaligned.

Thus, spacing S is provided as a play portion like in the fuel tank 20 shown in FIG. 8 so that at least one support column member (herein, the second member 220) can move in the diameter directions with respect to the lower panel 23 and the second base 233. Thereby, the misalignment between the first member 210 and the second member 220 that constitute the support column 200 can be absorbed, and the first member 210 and the second member 220 can be linked together.

Although in FIG. 8 the first member 210 and the first base 231 are connected together by screw connection and the second member 220 and the second base 233 are connected together by holding the support column flange section 225, also the opposite configuration is possible.

The preferred embodiment(s) of the present invention has/have been described above with reference to the accompanying drawings, whilst the present invention is not limited to the above examples. A person skilled in the art may find various alterations and modifications within the scope of the appended claims, and it should be understood that they will naturally come under the technical scope of the present invention.

For example, although in the above embodiment the number of support columns provided in the interior of the fuel tank is one, the present invention is not limited to such an example. For example, a plurality of support columns may be provided in order to ensure rigidity necessary for the fuel tank.

Further, the fuel stored in the fuel tank according to the present invention may be fuel other than gasoline; for example, may be light oil, biodiesel fuel, ethanol, or the like.

### Reference Signs List

- 10,20: fuel tank
- 11, 21: upper panel
- 11a, 13a: concave section
- 11b, 13b: flange section
- 13, 23: lower panel
- 100, 200: support column
- 110, 210: first member
- 111, 211: pedestal section
- 113: leg section
- 113a: tip section
- 113b: end surface
- 113c: tapered section
- 115: fastening claw
- 115a: oblique surface
- 115b: end surface
- 120, 220: second member
- 121, 221: main body section
- 121a, 211a: screw crest
- 123: opening
- 123b: one end surface
- 124: guide groove
- 125: concave section
- 127: second concave section
- 131, 231: first base (base)
- 133, 233: second base (base)
- 131a, 231a: cylindrical section
- 131b, 231b: flange section
- 131c, 231c: screw groove
- 140, 151: lock member
- 153: elastic member
- 225: support column flange section
- 233a: upper section
- 233b: wall section
- 233c: flange section
- 233d: opening

## Claims

1. A fuel tank (10) comprising:
an upper panel (11) and a lower panel (13) made of iron;
at least one support column (100) that is provided in an interior space (V) formed by causing the upper panel (11) and the lower panel (13) to face each other and that is made of a thermoplastic resin, and
a first base (131) made of iron that is provided on an inner surface of the upper panel (11) so as to correspond to the support column (100) and connects the upper panel (11) and one end of the support column (100) together, and a second base (133) made of iron that is provided on an inner surface of the lower panel (13) and connects another end of the support column (100) of the lower panel (13),
wherein the support column (100) is extended in a direction in which the upper panel (11) and
the lower panel (13) face each other, and is formed by linking together a first member (110) fixed to the inner surface of the upper panel (11) via the first base (131) and a second member (120) fixed to the inner surface of the lower panel (13) via the second base (133), by means of a snap-fit mechanism, and
wherein the first member (110) and the first base (131), and the second member (120) and the second base (133) are each connected together by screw connection.

2. A fuel tank (20) comprising:
an upper panel (21) and a lower panel (23) made of iron,
at least one support column (200) that is provided in an interior space (V) formed by causing the upper panel (21) and the lower panel (23) to face each other and that is made of a thermoplastic resin, and
a first base (231) made of iron that is provided on an inner surface of
the upper panel (21) so as to correspond to the support column (200) and connects the upper panel (21) and one end of the support column (200) together, and a second base (233) made of iron that is provided on an inner surface of the lower panel (23) and connects another end of the support column (200) of the lower panel (23),
wherein the support column (200) is extended in a direction in which the upper panel (21) and
the lower panel (23) face each other, and is formed by linking together a first member (210) fixed to the inner surface of the upper panel (21) via the first base (231) and a second member (220) fixed to the inner surface of the lower panel (23) via the second base (233), by means of a snap-fit mechanism,
wherein one of the first member (210) and the second member (220) is formed as a flange-equipped support column member (220) including a support column flange section (225),
a base that allows the flange-equipped support column member (220) to be connected to the upper panel (21) or the lower panel (23) is provided so as to hold the support column flange section (225) together with the upper panel (21) or the lower panel (23) in a state where a spacing where the support column flange section (225) is movable at least in a diameter direction is provided, and
another of the first member (210) and the second member (220) is connected by screw connection to a base that allows the member to be connected to the upper panel (21) or the lower panel (23).

3. The fuel tank (10, 20) according to claim 1 or 2,
wherein one of the first member (110, 210) and the second member (120, 220) is a cylindrical member in which at least one opening (123) is formed in a side surface,
another of the first member (110, 210) and the second member (120, 220) is an insertion member including a plurality of leg sections (113) inserted in the cylindrical member, and
at least one of the leg sections (113) of the insertion member is provided with at least one fastening claw (115) that is fastened to the opening (123) of the cylindrical member in a state where the insertion member is inserted in the cylindrical member.

4. The fuel tank (10, 20) according to claim 3,
wherein, in the leg section (113) of the insertion member, an outer surface side of a tip section is in a tapered shape (113c).

5. The fuel tank (10, 20) according to claim 3 or 4,
wherein a guide groove (124) that guides the leg section (113) of the insertion member inserted in the cylindrical member is formed on an inner surface of the cylindrical member, and
the guide groove (124) has an inclination in which a thickness of the cylindrical member becomes larger from a tip side where the insertion member is inserted toward the opening (123).

6. The fuel tank (10, 20) according to any one of claims 3 to 5,
wherein a lock member (140, 151) that locks a position of a tip section of the insertion member is connected to a bottom section of the cylindrical member facing the tip section of the insertion member, via an elastic member (153), and
the lock member (140, 151) is fitted into the tip section of the insertion member when the insertion member is inserted into the cylindrical member.

7. The fuel tank (10, 20) according to any one of claims 3 to 5,
wherein a tip section of the insertion member is provided with a lock member (140, 151) that is formed by solidifying a resin adhesive and that locks a position of the tip section.

8. The fuel tank (10, 20) according to claim 1 or 2,
wherein at least one of the first member (110, 210) and the second member (120, 220) is hollow.

9. The fuel tank (10, 20) according to any one of claims 1 to 8,
wherein the first base (131, 231) and the second base (133, 233) each include a flange section (131b, 231b, 233c) fixed to the upper panel (11, 21) or the lower panel (13, 23), and
the upper panel (11, 21) and the flange section (131b, 231b) of the first base (131, 231), or the lower panel (13, 23) and the flange section (233c) of the second base (220) are fixed together by spot welding.

10. The fuel tank (10, 20) according to claim 9,
wherein a portion between the upper panel (11, 21) or the lower panel (13, 23) and the flange section (131b, 231b, 233c) that are spot-welded together is further fixed by solder.

11. The fuel tank (10, 20) according to any one of claims 1 to 8,
wherein the first base (131, 231) and the second base (133, 233) each include a flange section (131b, 231b, 233c) fixed to the upper panel (11, 21) or the lower panel (13, 23), and
the upper panel (11, 21) and the flange section (131b, 231b) of the first base (131, 231), or the lower panel (13, 23) and the flange section (233c) of the second base (133, 233) are fixed together by projection welding.

## Patentansprüche

1. Kraftstofftank (10), umfassend:
eine obere Platte (11) und eine untere Platte (13), die aus Eisen hergestellt sind;
mindestens eine Stützsäule (100), die in einem Innenraum (V) vorgesehen ist, der dadurch gebildet wird, indem die obere Platte (11) und die untere Platte (13) einander zugewandt sind, und die aus einem thermoplastischen Harz hergestellt ist; und
eine erste, aus Eisen hergestellte Basis (131), die auf einer Innenfläche der oberen Platte (11) vorgesehen ist, so dass sie mit der Stützsäule (100) korrespondiert, und die die obere Platte (11) und ein Ende der Stützsäule (100) miteinander verbindet, und eine zweite, aus Eisen hergestellte Basis (133), die auf einer Innenfläche der unteren Platte (13) vorgesehen ist und ein anderes Ende der Stützsäule (100) der unteren Platte (13) verbindet,
wobei sich die Stützsäule (100) in einer Richtung erstreckt, in der die obere Platte (11) und die untere Platte (13) einander zugewandt sind, und durch Verbinden eines ersten Teils (110), das mittels der ersten Basis (131) an der Innenfläche der oberen Platte (11) befestigt ist, und eines zweiten Teils (120), das mittels der zweiten Basis (133) an der Innenfläche der unteren Platte (13) befestigt ist, über einen Schnappmechanismus gebildet ist, und
wobei das erste Teil (110) und die erste Basis (131) und das zweite Teil (120) und die zweite Basis (133) jeweils durch eine Schraubverbindung miteinander verbunden sind.

2. Kraftstofftank (20) umfassend:
eine obere Platte (21) und eine untere Platte (23), die aus Eisen hergestellt sind,
mindestens eine Stützsäule (200), die in einem Innenraum (V) vorgesehen ist, der dadurch gebildet wird, indem die obere Platte (21) und die untere Platte (23) einander zugewandt sind, und die aus einem thermoplastischen Harz hergestellt ist; und
eine erste, aus Eisen hergestellte Basis (231), die auf einer Innenfläche der oberen Platte (21) so vorgesehen ist, dass sie mit der Stützsäule (200) korrespondiert, und die obere Platte (21) und ein Ende der Stützsäule (200) miteinander verbindet, und eine zweite, aus Eisen hergestellte Basis (233), die auf einer Innenfläche der unteren Platte (23) vorgesehen ist und ein anderes Ende der Stützsäule (200) der unteren Platte (23) verbindet,
wobei sich die Stützsäule (200) in einer Richtung erstreckt, in der die obere Platte (21) und die untere Platte (23) einander zugewandt sind, und durch Verbinden eines ersten Teils (210), das mittels der ersten Basis (231) an der Innenfläche der oberen Platte (21) befestigt ist, und eines zweiten Teils (220), das mittels der zweiten Basis (233) an der Innenfläche der unteren Platte (23) befestigt ist, über einen Schnappmechanismus gebildet ist,
wobei eines von dem ersten Teil (210) und dem zweiten Teil (220) als ein mit einem Flansch ausgestattetes Stützsäulenelement (220) ausgebildet ist, das einen Stützsäulenflanschabschnitt (225) enthält,
eine Basis, die es ermöglicht, das mit einem Flansch versehene Stützsäulenelement (220) mit der oberen Platte (21) oder der unteren Platte (23) zu verbinden, vorgesehen ist, um den Stützsäulenflanschabschnitt (225) zusammen mit der oberen Platte (21) oder der unteren Platte (23) in einem Zustand zu halten, in dem ein Abstand, in dem der Stützsäulenflanschabschnitt (225) zumindest in einer Durchmesserrichtung beweglich ist, vorgesehen ist, und
ein anderes des ersten Teils (210) und des zweiten Teils (220) durch eine Schraubverbindung mit einer Basis verbunden ist, die es ermöglicht, das Teil mit der oberen Platte (21) oder der unteren Platte (23) zu verbinden.

3. Kraftstofftank (10, 20) nach Anspruch 1 oder 2,
wobei eines von dem ersten Teil (110, 210) und dem zweiten Teil (120, 220) ein zylindrisches Teil ist, in dem mindestens eine Öffnung (123) in einer Seitenfläche ausgebildet ist,
das andere des ersten Teils (110, 210) und des zweiten Teils (120, 220) ein Einsetzteil ist, das eine Vielzahl von Schenkelabschnitten (113) aufweist, die in das zylindrische Teil eingesetzt sind, und
mindestens einer der Schenkelabschnitte (113) des Einsetzteils mit mindestens einer Befestigungsklaue (115) versehen ist, die an der Öffnung (123) des zylindrischen Teils in einem Zustand befestigt ist, in dem das Einsetzteil in das zylindrische Teil eingesetzt ist.

4. Kraftstofftank (10, 20) nach Anspruch 3,
wobei in dem Schenkelabschnitt (113) des Einsetzteils eine äußere Oberflächenseite eines Spitzenabschnitts eine verjüngte Form (113c) aufweist.

5. Kraftstofftank (10, 20) nach Anspruch 3 oder 4,
wobei eine Führungsnut (124), die den Schenkelabschnitt (113) des in das zylindrische Teil eingeführten Einsetzteils führt, an einer Innenfläche des zylindrischen Teils ausgebildet ist, und
die Führungsnut (124) eine Neigung aufweist, bei der eine Dicke des zylindrischen Teils von einer Spitzenseite, wo das Einsetzteil eingeführt wird, in Richtung der Öffnung (123) größer wird.

6. Kraftstofftank (10, 20) nach einem der Ansprüche 3 bis 5,
wobei ein Verriegelungselement (140, 151), das eine Position eines Spitzenabschnitts des Einsetzteils verriegelt, mittels eines elastischen Teils (153) mit einem Bodenabschnitt des zylindrischen Teils verbunden ist, der dem Spitzenabschnitt des Einsetzteils zugewandt ist, und
das Verriegelungselement (140, 151) in den Spitzenabschnitt des Einsetzteils eingepasst wird, wenn das Einsetzteil in das zylindrische Teil eingeführt wird.

7. Kraftstofftank (10, 20) nach einem der Ansprüche 3 bis 5,
wobei ein Spitzenabschnitt des Einsetzteils mit einem Verriegelungselement (140, 151) versehen ist, das durch Verfestigung eines Harzklebstoffs gebildet wird und das eine Position des Spitzenabschnitts verriegelt.

8. Kraftstofftank (10, 20) nach Anspruch 1 oder 2,
wobei mindestens eines von dem ersten Teil (110, 210) und dem zweiten Teil (120, 220) hohl ist.

9. Kraftstofftank (10, 20) nach einem der Ansprüche 1 bis 8,
wobei die erste Basis (131, 231) und die zweite Basis (133, 233) jeweils einen Flanschabschnitt (131b, 231b, 233c) aufweisen, der an der oberen Platte (11, 21) oder der unteren Platte (13, 23) befestigt ist, und
die obere Platte (11, 21) und der Flanschabschnitt (131b, 231b) der ersten Basis (131, 231) oder die untere Platte (13, 23) und der Flanschabschnitt (233c) der zweiten Basis (220) durch Punktschweißen miteinander verbunden sind.

10. Kraftstofftank (10, 20) nach Anspruch 9,
wobei ein Abschnitt zwischen der oberen Platte (11, 21) oder der unteren Platte (13, 23) und dem Flanschabschnitt (131b, 231b, 233c), die miteinander punktgeschweißt sind, ferner durch Löten fixiert ist.

11. Kraftstofftank (10, 20) nach einem der Ansprüche 1 bis 8,
wobei der erste Boden (131, 231) und der zweite Boden (133, 233) jeweils einen Flanschabschnitt (131b, 231b, 233c) aufweisen, der an der oberen Platte (11, 21) oder der unteren Platte (13, 23) befestigt ist, und
die obere Platte (11, 21) und der Flanschabschnitt (131b, 231b) der ersten Basis (131, 231) oder die untere Platte (13, 23) und der Flanschabschnitt (233c) der zweiten Basis (133, 233) durch Buckelschweißen miteinander verbunden sind.

## Revendications

1. Réservoir de combustible (10) comprenant :
un panneau supérieur (11) et un panneau inférieur (13) constitués de fer ;
au moins une colonne de support (100) qui est fournie dans un espace intérieur (V) formé en faisant en sorte que le panneau supérieur (11) et le panneau inférieur (13) se font face l'un l'autre et qui est constituée d'une résine thermoplastique, et
une première base (131) constituée de fer qui est fournie sur une surface interne du panneau supérieur (11) afin de correspondre à la colonne de support (100) et raccorde le panneau supérieur (11) et une extrémité de la colonne de support (100) ensemble, et une seconde base (133) constituée de fer qui est fournie sur une surface interne du panneau inférieur (13) et raccorde l'autre extrémité de la colonne de support (100) du panneau inférieur (13),
dans lequel la colonne de support (100) est étendue dans une direction dans laquelle le panneau supérieur (11) et le panneau inférieur (13) se font face l'un l'autre, et est formée en liant ensemble un premier élément (110) fixé à la surface interne du panneau supérieur (11) via la première base (131) et un second élément (120) fixé à la surface interne du panneau inférieur (13) via la seconde base (133), au moyen d'un mécanisme d'encliquetage, et
dans lequel le premier élément (110) et la première base (131), et le second élément (120) et la seconde base (133) sont à chaque fois raccordés ensemble par un raccord de vis.

2. Réservoir de combustible (20) comprenant :
un panneau supérieur (21) et un panneau inférieur (23) constitués de fer,
au moins une colonne de support (200) qui est fournie dans un espace intérieur (V) formé en faisant en sorte que le panneau supérieur (21) et le panneau inférieur (23) se font face l'un l'autre et qui est constituée d'une résine thermoplastique, et
une première base (231) constituée de fer qui est fournie sur une surface interne du panneau supérieur (21) afin de correspondre à la colonne de support (200) et raccorde le panneau supérieur (21) et une extrémité de la colonne de support (200) ensemble, et une seconde base (233) constituée de fer qui est fournie sur une surface interne du panneau inférieur (23) et raccorde une autre extrémité de la colonne de support (200) du panneau inférieur (23),
dans lequel la colonne de support (200) est étendue dans une direction dans laquelle le panneau supérieur (21) et le panneau inférieur (23) se font face l'un l'autre, et est formée par liaison ensemble d'un premier élément (210) fixé à la surface interne du panneau supérieur (21) via la première base (231) et d'un second élément (220) fixé à la surface interne du panneau inférieur (23) via la seconde base (233), au moyen d'un mécanisme d'encliquetage,
dans lequel un du premier élément (210) et du second élément (220) est formé comme un élément de colonne de support équipé d'une bride (220) incluant une section de bride de colonne de support (225), une base qui permet à l'élément de colonne de support équipé d'une bride (220) d'être raccordé au panneau supérieur (21) ou au panneau inférieur (23) est fournie afin de supporter la section de bride de colonne de support (225) avec le panneau supérieur (21) ou le panneau inférieur (23) dans un état où un espacement où la section de bride de colonne de support (225) est mobile au moins dans une direction de diamètre est fourni, et
un autre du premier élément (210) et du second élément (220) est raccordé par un raccord de vis à une base qui permet à l'élément d'être raccordé au panneau supérieur (21) ou au panneau inférieur (23).

3. Réservoir de combustible (10, 20) selon la revendication 1 ou 2,
dans lequel un du premier élément (110, 210) et du second élément (120, 220) est un élément cylindrique dans lequel au moins une ouverture (123) est formée dans une surface latérale,
un autre du premier élément (110, 210) et du second élément (120, 220) est un élément d'insertion incluant plusieurs sections de pattes (113) insérées dans l'élément cylindrique, et
au moins une des sections de patte (113) de l'élément d'insertion est munie d'au moins une griffe de fixation (115) qui est fixée à l'ouverture (123) de l'élément cylindrique dans un état où l'élément d'insertion est inséré dans l'élément cylindrique.

4. Réservoir de combustible (10, 20) selon la revendication 3, dans lequel, dans la section de patte (113) de l'élément d'insertion, un côté de surface externe d'une section de bout est dans une forme effilée (113c).

5. Réservoir de combustible (10, 20) selon la revendication 3 ou 4,
dans lequel une rainure de guidage (124) qui guide la section de patte (113) de l'élément d'insertion insérée dans l'élément cylindrique est formée sur une surface interne de l'élément cylindrique, et
la rainure de guidage (124) présente une inclinaison dans laquelle une épaisseur de l'élément cylindrique devient plus large à partir d'un côté de bout où l'élément d'insertion est inséré vers l'ouverture (123).

6. Réservoir de combustible (10, 20) selon l'une quelconque des revendications 3 à 5,
dans lequel un élément de verrouillage (140, 151) qui verrouille une position d'une section de bout de l'élément d'insertion est raccordé à une section basse de l'élément cylindrique faisant face à la section de bout de l'élément d'insertion, via un élément élastique (153), et
l'élément de verrouillage (140, 151) est ajusté dans la section de bout de l'élément d'insertion lorsque l'élément d'insertion est inséré dans l'élément cylindrique.

7. Réservoir de combustible (10, 20) selon l'une quelconque des revendications 3 à 5,
dans lequel une section de bout de l'élément d'insertion est munie d'un élément de verrouillage (140, 151) qui est formé par solidification d'un adhésif de résine et qui verrouille une position de la section de bout.

8. Réservoir de combustible (10, 20) selon la revendication 1 ou 2,
dans lequel au moins un du premier élément (110, 210) et du second élément (120, 220) est creux.

9. Réservoir de combustible (10, 20) selon l'une quelconque des revendications 1 à 8,
dans lequel la première base (131, 231) et la seconde base (133, 233) incluent chacune une section de bride (131b, 231b, 233c) fixée au panneau supérieur (11, 21) ou au panneau inférieur (13, 23), et
le panneau supérieur (11, 21) et la section de bride (131b, 231b) de la première base (131, 231), ou le panneau inférieur (13, 23) et la section de bride (233c) de la seconde base (220) sont fixés ensemble par soudage par points.

10. Réservoir de combustible (10, 20) selon la revendication 9, dans lequel une portion entre le panneau supérieur (11, 21) ou le panneau inférieur (13, 23) et la section de bride (131b, 231b, 233c) qui sont soudées par points ensemble est de plus fixée par brasage.

11. Réservoir de combustible (10, 20) selon l'une quelconque des revendications 1 à 8,
dans lequel la première base (131, 231) et la seconde base (133, 233) incluent chacune une section de bride (131b, 231b, 233c) fixée au panneau supérieur (11, 21) ou au panneau inférieur (13, 23), et
le panneau supérieur (11, 21) et la section de bride (131b, 231b) de la première base (131, 231), ou le panneau inférieur (13, 23) et la section de bride (233c) de la seconde base (133, 233) sont fixés ensemble par soudage par bossages.
